# EUROPÄISCHE PATENTSCHRIFT

(11) **EP 3 299 228 B1**
(45) Veröffentlichungstag und Bekanntmachung des Hinweises auf die Patenterteilung: **12.02.2020**
(21) Anmeldenummer: 17182838.7
(22) Anmeldetag: 24.07.2017
(51) Int. Cl.: B60R 25/25, G06K 9/00

(54) **VERFAHREN UND SYSTEM ZUM STEUERN EINER TÜR EINES KRAFTFAHRZEUGS**
METHOD AND SYSTEM FOR CONTROLLING A DOOR OF A MOTOR VEHICLE
PROCÉDÉ ET SYSTÈME DE COMMANDE D'UNE PORTE D'UN VÉHICULE AUTOMOBILE

(30) Priorität: 23.09.2016 DE 102016218351
(43) Veröffentlichungstag der Anmeldung: 28.03.2018
(73) Patentinhaber: VOLKSWAGEN AKTIENGESELLSCHAFT, 38440 Wolfsburg (DE)
(72) Erfinder: Pennewitz, Erik, 38126 Braunschweig (DE)

(56) Entgegenhaltungen:
- EP-A2- 0 770 749
- DE-A1-102014 018 459
- DE-A1-102014 225 841
- DE-B3-102015 014 211
- US-A1- 2008 175 443

## Beschreibung

Die Erfindung betrifft ein Verfahren zum Steuern einer Tür eines Kraftfahrzeugs. Die Erfindung betrifft auch ein System zum Steuern einer Tür eines Kraftfahrzeugs.

Aus dem allgemeinen Stand der Technik sind sensorgesteuerte Heckklappen bekannt. Dazu weist ein Kraftfahrzeug mit einer sensorgesteuerten Heckklappe einen Sensor am Fahrzeugheck auf. Möchte ein Nutzer nun die sensorgesteuerte Heckklappe berührungslos öffnen, so kann der Nutzer eine Geste im Bereich des Fahrzeughecks ausführen. Beispielsweise kann der Sensor am Heck im Bereich des Stoßdämpfers des Kraftfahrzeugs angeordnet sein, sodass der Nutzer durch eine Geste, wie beispielsweise eine Bewegung mit seinem Fuß, die Heckklappe des Kraftfahrzeugs berührungslos öffnen kann.

Möchte der Nutzer in den Kofferraum des Kraftfahrzeugs etwas einladen und nähert sich dem Kraftfahrzeug, wenn er etwas trägt, also beladen ist, so ist der Nutzer in seiner Beweglichkeit eingeschränkt, um zum einen entweder händisch die Heckklappe des Kraftfahrzeugs zu öffnen oder eine Geste auszuführen, um damit die Heckklappe des Kraftfahrzeugs zu öffnen.

Um das Öffnen der Heckklappe des Kraftfahrzeugs für den Nutzer zu vereinfachen, sind aus dem Stand der Technik verschiedene Ansätze bekannt.

Dazu schlägt beispielsweise die DE 10 2013 110 296 A1 ein Verfahren zur Betätigungserfassung für eine Funktion an einem Kraftfahrzeug vor. Bei dem Verfahren werden Signale eines Annäherungssensors auf eine Signalveränderung hin überwacht und für eine vorbestimmte Zeitdauer beobachtet. Verändern sich die Signale des Annäherungssensors innerhalb der vorbestimmten Zeitdauer, so erfolgt die Betätigung der Funktion an dem Kraftfahrzeug. Als Funktion kann dabei eine Öffnungsbedienung einer Heckklappe erfolgen. Der Nachteil eines solchen Verfahrens besteht darin, dass sich die Heckklappe bei jeder Annäherung öffnet, auch wenn der Nutzer nichts in den Kofferraum des Kraftfahrzeugs einladen möchte.

Bei den signalgesteuerten Heckklappen kann es aber auch vorkommen, dass sich die Heckklappe aufgrund eines Fehlsignals aus Versehen öffnet. Damit sich die Heckklappe des Kraftfahrzeugs nicht ungewollt öffnet, schlägt die DE 10 2013 013 391 A1 ein Authentifizierungsverfahren zur Berechtigungsüberprüfung eines Nutzers bei einem Kraftfahrzeugschließsystem vor. Bei dem Verfahren wird eine Anfrage seitens einer Sendeeinheit eines Kraftfahrzeugs generiert und ausgesendet, die zur Authentifizierung mittels einer externen Sende-/Empfangsvorrichtung empfangen wird. Bei erfolgreicher Authentifizierung wird ein optisches und/oder akustisches Signal ausgegeben, welches seitens der externen Sende-/Empfangsvorrichtung oder seitens des Kraftfahrzeugs erzeugt wird. Durch ein derartiges optisches und/oder akustisches Signal wird der Nutzer unmittelbar darüber in Kenntnis gesetzt, dass die Authentifizierung erfolgreich durchgeführt wurde und ihm der Zugang zum Kraftfahrzeug freigegeben ist und/oder verschiedene Funktionen des Kraftfahrzeugs zur Nutzung freigegeben wurden. Bei diesen freigegebenen Funktionen kann es sich beispielsweise auch um die Aktivierung weiterer Sensoren am Kraftfahrzeug handeln. Beispielsweise können entsprechende Sensoren am Heck des Kraftfahrzeuges aktiviert werden, um das Öffnen der Heckklappe mittels entsprechender Gesten auszulösen, um beispielsweise ein Annähern des Fußes des Nutzers an das Heck des Kraftfahrzeuges zu detektieren, um ein automatisches Öffnen der Heckklappe des Kraftfahrzeuges durch eine entsprechende Bewegung oder Geste des Nutzers auszulösen. Nachteil an einem solchen Verfahren ist dennoch, dass der Nutzer aktiv eine Geste ausführen muss, um beispielsweise die Heckklappe des Kraftfahrzeugs zu öffnen.

Anstelle eine Heckklappe mithilfe eines kraftfahrzeugseitigen Sensors zu öffnen, schlägt die DE 102014 225 841 A1 ein Verfahren zum Steuern eines Kofferraums vor, der geöffnet oder geschlossen werden soll, mit Verwendung einer tragbaren Vorrichtung. Bei dem Verfahren wird ein Elektromyogrammsignal für eine Reaktivität des Körpers des Nutzers, der einen Elektromyogrammsensor verwendet, erzeugt und an das Kraftfahrzeug übertragen. Ferner wird der zu öffnende oder zu schließende Kofferraum des Kraftfahrzeugs in Abhängigkeit von einer Stärke des Elektromyogrammsignals und einer Distanz des Nutzers von dem Fahrzeug gesteuert. Der Nachteil des Elektromyogrammsensor besteht darin, dass dieser dazu eingerichtet ist, Kontraktionen von Muskeln zu messen. Dazu ist der Elektromyogrammsensor an Körperstellen des Nutzers anzubringen, welche bei einer tragenden Belastung eine Muskelkontraktion aufweisen. Trägt der Nutzer beispielsweise einen schweren Rucksack oder trägt der Nutzer eine schwere Tüte an einem ausgestreckten Arm, wäre eine Muskelkontraktion nicht nachweisbar und der Elektromyogrammsensor würde kein Signal zum Steuern des Kofferraums ausgeben. Entsprechend sind derartige Sensoren besonders ungenau und der Nutzer müsste weiterhin händisch die Heckklappe des Kraftfahrzeugs betätigen.

Die Auswertung von Bewegungszuständen eines Nutzers kann nicht nur zum Betätigen einer Heckklappe, sondern auch zur Authentifizierung genutzt werden. Dazu ist aus der US 2008/0175443 A1 eine Vorrichtung zur Identifizierung eines Nutzers bekannt. Die Vorrichtung umfasst dazu ein Zugriffsteuerungselement, welches Beschleunigungsdaten eines Beschleunigungssensors mit Bewegungsdaten des Nutzers vergleicht. Stimmen die Beschleunigungsdaten mit den Bewegungsdaten überein, so wird der Nutzer als Nutzer der Vorrichtung identifiziert und autorisiert und die Vorrichtung zur Bedienung für den Nutzer freigegeben.

Aufgabe der vorliegenden Erfindung ist es, ein Verfahren sowie ein System zum Steuern einer Tür eines Kraftahrzeugs besonders zuverlässig zu gestalten.

Die Aufgabe wird durch die Gegenstände der unabhängigen Patentansprüche gelöst. Vorteilhafte Weiterbildungen der Erfindung sind durch die Merkmale der abhängigen Patentansprüche, die folgende Beschreibung sowie die Figuren offenbart.

Der Erfindung liegt die Erkenntnis zugrunde, dass die Bewegung einer Person, insbesondere der Gang einer Person, dadurch beeinträchtigt wird, ob diese Person etwas trägt oder nicht. Je schwerer das Gewicht einer zu tragenden Last ist, desto mehr verändert sich der Gang der belasteten Person gegenüber dem Zustand, wenn diese Person nichts trägt. Beispielsweise reduziert sich die Schrittgeschwindigkeit oder Schrittlänge, wenn eine Person etwas trägt im Vergleich zu einem unbelasteten Zustand, das heißt, wenn diese Person nichts trägt. Diese Veränderung des Gangs rührt daher, dass die Person eine stabile Körperhaltung beibehalten möchte. Die Veränderung des Gangs einer Person kann als Indiz dafür genutzt werden, abzuschätzen oder zu analysieren, ob die Person etwas trägt oder nicht, sich also in einem belasteten oder unbelasteten Zustand befindet. Die Abschätzung oder Analyse des Gangs der Person kann dazu verwendet werden, diese Person bei der Interaktion mit einer Tür eines Kraftfahrzeugs zu unterstützen.

Erfindungsgemäß wird diese Aufgabe gelöst durch ein Verfahren nach Anspruch 1 zum Steuern einer Tür eines Kraftfahrzeugs. Bei der Tür kann es sich beispielsweise um eine Seitentür des Kraftfahrzeugs oder um eine Heckklappe des Kraftfahrzeugs handeln. Alternativ kann das Verfahren auch dazu eingerichtet sein, mehrere Türen des Kraftfahrzeugs zu steuern. Bei dem Verfahren wird zunächst ein Gang eines Nutzers mittels eines portablen mobilen Endgeräts ausgewertet, welches der Nutzer bei sich trägt. Mit "Gang" ist hier insbesondere eine Bewegung des Gangs oder des Gehens des Nutzers gemeint. Beim Auswerten des Gangs wird ein Gangparameter erfasst. Bevorzugt können auch mehrere Gangparameter erfasst werden. Der Gangparameter signalisiert dabei einen beladenen oder unbeladenen Zustand des Nutzers. Mit "beladenem Zustand" ist insbesondere gemeint, dass der Nutzer mit einer Last versehen ist oder eine Last trägt oder stützt. Mit "unbeladenem Zustand" ist insbesondere gemeint, dass der Nutzer mit keiner Last versehen ist oder nichts trägt oder stützt.

Nach dem Auswerten des Signals wird ein Stellsignal mittels des portablen mobilen Endgeräts in Abhängigkeit von dem Gang des Nutzers ausgegeben. In einem weiteren Verfahrensschritt wird das Stellsignal von außerhalb des Kraftfahrzeugs mittels einer Erfassungseinrichtung des Kraftfahrzeugs empfangen. Schließlich steuert eine Steuereinrichtung des Kraftfahrzeugs nach Empfangen des Stellsignals die Tür des Kraftfahrzeugs an. Beim Ansteuern der Tür kann die Tür bevorzugt geöffnet oder geschlossen werden.

Durch das portable mobile Endgerät kann auf besonders einfache und zuverlässige Art und Weise der Gang des Nutzers analysiert werden. Weiterhin kann durch eine derartige Datenauswertung eine Fehlbedienung der Tür des Kraftfahrzeugs verhindert werden, wodurch die Tür des Kraftfahrzeugs besonders zuverlässig gesteuert werden kann. Ferner kann durch das Ansteuern der Tür mit Hilfe des portablen mobilen Endgeräts auf kraftfahrzeugseitige Sensoren verzichtet werden. Dadurch können zum einen Herstellungskosten des Kraftfahrzeugs und zum anderen Bauraum im Kraftfahrzeug eingespart werden. Zusätzlich wird die Betätigung der Tür des Kraftfahrzeugs für den Nutzer vereinfacht, da keine Gesten erforderlich sind, um mit der Tür des Kraftfahrzeugs zu interagieren.

Bei dem portablen mobilen Endgerät kann es sich beispielsweise um ein Mobiltelefon, insbesondere ein Smartphone, oder um ein elektronisches Fitnessarmband oder um eine elektronische Uhr, insbesondere eine Smartwatch (englisch für schlaue Uhr), oder um eine elektronische Brille, wie beispielsweise ein Head-Up-Display (englisch für Kopf-oben-Anzeige) oder eine Augmented Reality Brille (englisch für erweiterte Realitätsbrille), handeln. Derartige portable mobile Endgeräte werden insbesondere auch als Smart-Device bezeichnet.

Als Gangparameter kann beispielsweise eine Schrittlänge und/oder eine Schrittgeschwindigkeit und/oder ein Schrittrhythmus und/oder eine Herzfrequenz des Nutzers und/oder ein Puls des Nutzers und/oder ein Armschwingen der Arme des Nutzers und/oder eine Körperneigung des Nutzers und/oder eine Zeitspanne erfasst werden, zu der die Füße des Nutzers in Kontakt mit dem Boden stehen.

Zur Erfassung des zumindest einen Gangparameters weist das portable mobile Endgerät eine Sensoreinrichtung mit einem Beschleunigungssensor auf. Damit der erfasste Gangparameter in einen beladenen oder unbeladenen Zustand des Nutzers klassifiziert werden kann, weist das portable mobile Endgerät bevorzugt ferner eine Steuereinrichtung auf, welche dazu eingerichtet ist, den Gangparameter von der Sensoreinrichtung zu empfangen und auszuwerten oder zu analysieren. Zum Auswerten des Gangs des Nutzers kann ein Anlernvorgang des portablen mobilen Endgeräts erfolgen. Dazu kann das portable mobile Endgerät einen Programmcode aufweisen, welcher der Steuereinrichtung hinterlegt ist und welcher dazu eingerichtet ist, den Anlernvorgang durchzuführen. Der Programmcode kann einem Speicher der Steuereinrichtung hinterlegt sein. Bei dem Anlernvorgang kann dem portablen mobilen Endgerät ein Referenzwert oder mehrere Referenzwerte hinterlegt werden, welche einen unbeladenen Zustand des Nutzers kennzeichnen. Das kann beispielsweise damit erfolgen, dass der Nutzer im unbeladenen Zustand geht und das portable mobile Endgerät einen Referenzwert erfasst. Beispielsweise kann das portable mobile Endgerät eine Schrittgeschwindigkeit im unbeladenen Zustand erfassen. Es können auch unterschiedliche Referenzwerte der Steuereinrichtung hinterlegt werden, welche unterschiedliche Gangparameter charakterisieren oder beschreiben. Ist ein Referenzwert für den unbeladenen Zustand eines Nutzers festgelegt, so kann der Nutzer anschließend in einem beladenen Zustand gehen. Damit kann ein Referenzwert für den beladenen Zustand des Nutzers erfasst werden, welcher den beladenen Zustand des Nutzers kennzeichnet. Anstelle den Referenzwert für den beladenen Zustand des Nutzers vorzugeben, kann auch ein Wertebereich für den Referenzwert des beladenen Zustands vorgegeben werden, welcher den beladenen Zustand des Nutzers kennzeichnet oder charakterisiert. Der unbeladenen Zustand kann dann als Abweichung von dem beladenen Referenzwert erfasst werden. Um den Wertebereich für den beladenen Zustand vorzugeben, kann der Nutzer beispielsweise unterschiedlich schwere Lasten tragen. Wenn ein erfasster Gangparameter innerhalb des Wertebereichs liegt, so liegt bevorzugt ein beladener Zustand des Nutzers vor. Jedem Gangparameter, wie beispielsweise Schrittgeschwindigkeit oder Schrittlänge, kann damit ein Referenzwert oder Wertebereich für den beladenen und unbeladenen Zustand des Nutzers zugeordnet werden. Bei dem Anlernvorgang kann das portable mobile Endgerät einen unbeladenen oder nicht-beladenen Zustand des Nutzers messen und die Gangparameter zu verschiedenen Gangarten, insbesondere im belasteten oder beladenen Zustand des Nutzers, erlernen.

Nach dem Erfassen des Gangparameters wird mittels des portablen mobilen Endgeräts also das Stellsignal ausgegeben oder ausgesendet, welches durch die Erfassungseinrichtung des Kraftfahrzeugs empfangen wird. Beispielsweise kann das Stellsignal mittels eines Bluetooth-Standard oder einem WLAN-Standard an die Erfassungseinrichtung übertragen werden. Mit anderen Worten kann das Stellsignal gemäß einem WLAN-Standard oder Bluetooth-Standard ausgebildet sein, welches zum Aufbauen eines Kommunikationsnetzwerks vorgesehen ist. Bei dem WLAN-Standard handelt es sich beispielsweise um IEEE 802.11. Der IEEE 802.11 bezeichnet eine IEEE-Norm für Kommunikation in Funknetzwerken. Dabei kann die Erfassungseinrichtung dazu eingerichtet sein, ein WLAN-Signal oder Bluetooth-Signal als Stellsignal zu empfangen. Dadurch ergibt sich der Vorteil, dass auf besonders einfache und zuverlässige Art und Weise ein Kommunikationsnetzwerk ausgebildet werden kann.

Das Ausgeben des Stellsignals kann an eine Bedingung oder ein Kriterium geknüpft sein. Die Erfassungseinrichtung des Kraftfahrzeugs kann beispielsweise dazu eingerichtet sein, ein Erfassungssignal auszusenden. Das portable mobile Endgerät kann dazu eingerichtet sein, das Erfassungssignal zu empfangen. Durch das Aussenden des Erfassungssignals kann die Erfassungseinrichtung den erfassten Gangparameter des portablen mobilen Endgeräts abfragen. Das portable mobile Endgerät kann dazu eingerichtet sein, beim Empfangen des Erfassungssignals das Stellsignal auszugeben. Zusätzlich oder alternativ kann das portable mobile Endgerät das Stellsignal erst ausgeben, wenn durch das portable mobile Endgerät ein beladener Zustand erfasst wird. Signalisiert der Gangparameter einen unbeladenen Zustand des Nutzers, so gibt das portable mobile Endgerät bevorzugt kein Stellsignal aus.

Eine Ausführungsform sieht vor, dass der Nutzer in einem Nahbereich des Kraftfahrzeugs erfasst wird, wobei das portable mobile Endgerät das Stellsignal erst ausgibt, wenn sich der Nutzer in dem Nahbereich in einem vorbestimmten Abstand zu dem Kraftfahrzeug befindet. Mit anderen Worten wird das Stellsignal durch das portable mobile Endgerät ausgegeben, sobald sich der Nutzer in einem definierten Abstand zum Kraftfahrzeug befindet. Damit wird das Stellsignal nicht kontinuierlich durch das portable mobile Endgerät ausgesendet, sondern erst, wenn sich der Nutzer in dem vorbestimmten Abstand zu dem Kraftfahrzeug befindet. Dadurch ergibt sich der Vorteil, dass das portable mobile Endgerät, insbesondere ein Akku des portablen mobilen Endgeräts, nicht unnötig entleert wird, wodurch eine Einsatzbereitschaft des portablen mobilen Endgeräts verlängert werden kann.

Eine alternative Ausführungsform der Erfindung sieht vor, dass der Nutzer in einem Nahbereich des Kraftfahrzeugs erfasst wird, wobei die Steuereinrichtung die Tür des Kraftfahrzeugs erst ansteuert, wenn sich der Nutzer in dem Nahbereich in einem vorbestimmten Abstand zu dem Kraftfahrzeug befindet. Mit anderen Worten steuert die Steuereinrichtung die Tür des Kraftfahrzeugs an, sobald sich der Nutzer in einem definierten Abstand zum Kraftfahrzeug befindet. Dabei kann das portable mobile Endgerät das Stellsignal kontinuierlich ausgeben. Auch wenn die Erfassungseinrichtung das ausgegebene Stellsignal empfängt, steuert die Steuereinrichtung die Tür des Kraftfahrzeugs bevorzugt erst an, wenn sich der Nutzer einem definierten Abstand zum Kraftfahrzeug befindet. Dadurch ergibt sich der Vorteil, dass die Tür des Kraftfahrzeugs nicht angesteuert wird, wenn sich der Nutzer beispielsweise noch zu weit entfernt von dem Kraftfahrzeug befindet. Dadurch kann eine Sicherheit, insbesondere hinsichtlich eines Diebstahlschutzes, erhöht werden. Zusätzlich oder alternativ kann es vorgesehen sein, dass bei einer erfassten Annäherung des Nutzers an das Kraftfahrzeug, die Tür durch die Steuereinrichtung angesteuert wird, an die sich der Nutzer annähert. Weiß der Nutzer beispielsweise, dass der Kofferraum bereits voll beladen ist, so kann der Nutzer das Gepäck auf eine Rückbank des Kraftfahrzeugs ablegen. Dazu kann die Tür des Kraftfahrzeugs in Abhängigkeit von der Annäherung des portablen mobilen Endgeräts von außen an die Türe angesteuert werden. Beispielsweise kann sich der Nutzer einer Seitentür des Kraftfahrzeugs nähern, welche bei erfasster Annäherung geöffnet wird. Durch die Erfassung der Annäherung werden nur die Fahrzeugtüren angesteuert oder geöffnet, an welche sich der Nutzer annähert.

Damit der Nutzer in dem Nahbereich des Kraftfahrzeugs erfasst werden kann, kann das Kraftfahrzeug eine weitere Erfassungseinrichtung aufweisen. Beispielsweise kann die weitere Erfassungseinrichtung als Näherungssensor oder als Kamera, welche auf die Umgebung des Kraftfahrzeugs gerichtet ist, ausgebildet sein. Mit "Nahbereich" ist bevorzugt ein vorbestimmter Bereich um das Kraftfahrzeug herum gemeint, insbesondere im Bereich des Hecks des Kraftfahrzeugs. Besonders bevorzugt handelt es sich bei dem Nahbereich um einen Aufnahmebereich der weiteren Erfassungseinrichtung. Beispielsweise erstreckt sich der Nahbereich um das Kraftfahrzeug in einem Radius von 1 Zentimeter bis 10 Meter. Der vorbestimmte Abstand kann innerhalb des Nahbereichs beispielsweise zwischen 0,5 Meter und 5 Meter betragen. Mit anderen Worten ist die weitere Erfassungseinrichtung, welche am Kraftfahrzeug angeordnet ist, bevorzugt dazu eingerichtet, den Nutzer in einem Nahbereich des Kraftfahrzeugs zu erfassen und einen Abstand des Nutzers in dem Nahbereich zu dem Kraftfahrzeug zu bestimmen. Durch die weitere Erfassungseinrichtung kann bestimmt werden, ob sich der Nutzer überhaupt dem Kraftfahrzeug nähert und in das Kraftfahrzeug etwas einladen möchte. Dadurch kann eine Zuverlässigkeit zum Steuern der Tür des Kraftfahrzeugs oder zum Ausgeben des Stellsignals erhöht werden.

Gemäß einer vorteilhaften Weiterbildung steuert die Steuereinrichtung die Tür des Kraftfahrzeugs erst an, wenn der Nutzer für eine vorbestimmte Zeitspanne, insbesondere für eine Zeitspanne zwischen 0,5 Sekunden und 10 Sekunden, innerhalb des Nahbereichs erfasst wird. Dadurch ist das Aussenden oder Ausgeben des Stellsignals an eine weitere Bedingung, nämlich eine Aufenthaltszeit des Nutzers in dem Nahbereich, geknüpft. Dadurch ergibt sich der Vorteil, dass die Zuverlässigkeit beim Ansteuern der Tür weiter erhöht werden kann, da durch die Steuereinrichtung eine weitere Bedingung zum Ansteuern der Tür geprüft wird.

In vorteilhafter Weise übermittelt das portable mobile Endgerät ein Kennungssignal, welches eine Kennung aufweist, an das Kraftfahrzeug, wobei die Steuereinrichtung des Kraftfahrzeugs die Tür des Kraftfahrzeugs erst ansteuert, wenn das Kennungssignal mit einer der Steuereinrichtung hinterlegten Kennung übereinstimmt. Dazu kann die Steuereinrichtung die empfangene Kennung mit der der Steuereinrichtung hinterlegten Kennung vergleichen. Die Kennung, die der Steuereinrichtung hinterlegt ist, kann beispielsweise in einem Speicher der Steuereinrichtung abgelegt oder gespeichert sein. Es können auch mehrere Kennungen der Steuereinrichtung hinterlegt sein. Das Kennungssignal kann durch die Erfassungseinrichtung des Kraftfahrzeugs empfangen werden.

Damit die Kennung oder mehrere Kennungen der Steuereinrichtung hinterlegt sind, kann der Nutzer des Kraftfahrzeugs eine oder mehrere Kennungen vorgeben oder eingeben. Dazu kann das Kraftfahrzeug einen Zentralcomputer aufweisen. Mittels einer Eingabeeinrichtung des Zentralcomputers kann der Nutzer die Kennung oder mehrere Kennungen eines oder mehrerer portabler mobiler Endgeräte eingeben. Alternativ kann auch ein Anlernvorgang zum Hinterlegen der Kennungen erfolgen. Dabei kann eine weitere Erfassungseinrichtung des Kraftfahrzeugs ein oder mehrere portable mobile Endgeräte Erfassen und deren Kennung abfragen. Dem Nutzer können dann auf einem Bildschirm der Eingabeeinrichtung, welcher beispielsweise an einer Mittelkonsole in einem Innenraum des Kraftfahrzeugs angeordnet ist, die Kennung oder mehrere Kennungen erfasster portabler mobiler Endgeräte angezeigt werden. Durch eine Bestätigung des Nutzers kann die erfasste Kennung oder können die erfassten Kennungen der Steuereinheit hinterlegt werden. Die Bestätigung des Nutzer kann dabei durch eine Bestätigungshandlung, wie beispielsweise durch ein Drücken eines Bedienelements der Eingabeeinrichtung, erfolgen.

Stimmt die erfasste Kennung, welche durch das Kennungssignal von dem portablen mobilen Endgerät übermittelt wird, nicht mit der Kennung überein, die der Steuereinrichtung hinterlegt ist, so wird die Tür bevorzugt nicht angesteuert.

Durch den Vergleich der Kennungen - der empfangenen Kennung und der Steuereinrichtung hinterlegten Kennung - wird bevorzugt eine Authentifizierung oder Identifizierung des portablen mobilen Endgeräts, dem sogenannten Codegeber, durchgeführt. Mit einem "Vergleich der Kennungen" ist hier insbesondere gemeint, dass ein Schlüssel des portablen mobilen Geräts mit einem der Steuereinheit hinterlegten Schlüssel verifiziert wird. Die Erfassungseinrichtung kann dazu eingerichtet sein, ein weiteres Erfassungssignal auszusenden und ein Kennungssignal von dem portablen mobilen Endgerät zu empfangen. Das portable mobile Endgerät kann dazu eingerichtet sein, beim Empfangen des Erfassungssignals das Kennungssignal auszugeben. Durch das Aussenden des Erfassungssignals kann die Erfassungseinrichtung die Kennung, insbesondere eine digitale Kennung des portablen mobilen Endgeräts oder den Schlüssel des portablen mobilen Endgeräts abfragen.

Gemäß einer weiteren vorteilhaften Weiterbildung ist es vorgesehen, dass das Stellsignal automatisch ausgegeben wird. Beispielsweise kann die Steuereinrichtung des portablen mobilen Endgeräts dazu eingerichtet sein, das Stellsignal auszugeben. Beispielsweise kann das Stellsignal ausgegeben werden, sobald mittels der Steuereinrichtung erfasst wird, dass der Gangparameter einen beladenen Zustand des Nutzers signalisiert. Alternativ kann das Stellsignal erst nach einer Betätigung eines Bedienelements des portablen mobilen Endgeräts durch den Nutzer ausgegeben werden. Dabei wird das Stellsignal bevorzugt nicht automatisch ausgegeben, sondern erst wenn der Nutzer ein Bedienelement, wie beispielsweise einen Schalter oder einen Knopf, betätigt.

In vorteilhafter Weise kann der erfasste Gangparameter auch zur Einstellung von Einrichtungen im Kraftfahrzeug genutzt werden. Beispielsweise kann in Abhängigkeit von dem erfassten Gangparameter eine Einrichtung des Kraftfahrzeugs, insbesondere in einem Innenraum des Kraftfahrzeugs eingestellt werden. Dazu kann der erfasste Gangparameter einem vorbestimmten Nutzer zugeordnet werden. Als Einrichtung kann beispielsweise ein Sitz und/oder ein Spiegel, insbesondere ein Innenspiegel und/oder ein Außenspiegel eingestellt werden. Mit anderen Worten kann in Abhängigkeit von dem Gangparameter, also mit Hilfe der Ganganalyse des Nutzers, eine Sitzeinstellung und/oder eine Spiegeleinstellung vorgenommen oder durchgeführt werden.

Zu der Erfindung gehört auch ein System nach Anspruch 8 zum Steuern einer Tür eines Kraftfahrzeugs. Das System umfasst ein portables mobiles Endgerät, welches dazu eingerichtet ist, einen Gang eines Nutzers auszuwerten, welcher das portable mobile Endgerät bei sich trägt. Ferner ist das portable mobile Endgerät dazu eingerichtet, beim Auswerten des Gangs einen Gangparameter zu ermitteln. Der Gangparameter soll dabei einen beladenen oder unbeladenen Zustand des Nutzers signalisieren. Zum Auswerten des Gangs des Nutzers weist das portable mobile Endgerät eine Sensoreinrichtung mit einem Beschleunigungssensor auf. Die Sensoreinrichtung kann ferner einen optoelektronischen Sensor und/oder einen optischen Sensor und/oder einen bioelektronischen Sensor und/oder einen GPS Empfänger und/oder einen Magnetfeldsensor und/oder einen Neigungssensor aufweisen. Mittels des Neigungssensors kann beispielsweise eine Neigung des Oberkörpers des Nutzers erfasst werden. Mittels des optischen Sensors kann beispielsweise eine Herzfrequenz oder ein Puls des Nutzers gemessen werden. Durch das Aussenden und Empfangen unterschiedlicher Lichtimpulse des optischen Sensors kann eine Blutmenge unter der Haut ermittelt werden und ausgehend davon auf die Herzfrequenz geschlossen werden. Zudem ist das portable mobile Endgerät dazu eingerichtet, ein Stellsignal in Abhängigkeit von dem Gang des Nutzers auszugeben. Mittels des GPS-Empfängers kann eine Schrittgeschwindigkeit des Nutzers erfasst werden. Die Verwendung eines GPS-Empfängers erlaubt es insbesondere zu bestimmen, wo sich das portable mobile Endgerät und somit der Nutzer befindet. Daraus kann eine Strecke, die benötigte Zeit und damit auch die Geschwindigkeit ermittelt werden.

Ferner weist das System eine Erfassungseinrichtung auf, welche dazu eingerichtet ist, das Stellsignal des portablen mobilen Endgeräts von außerhalb des Kraftfahrzeugs zu empfangen. Schließlich umfasst das System eine Steuereinrichtung, welche dazu eingerichtet ist, nach Empfangen des Stellsignals die Tür des Kraftfahrzeugs anzusteuern. Die für das erfindungsgemäße Verfahren beschriebenen Vorteile und bevorzugten Ausführungsformen gelten auch für das erfindungsgemäße System und umgekehrt.

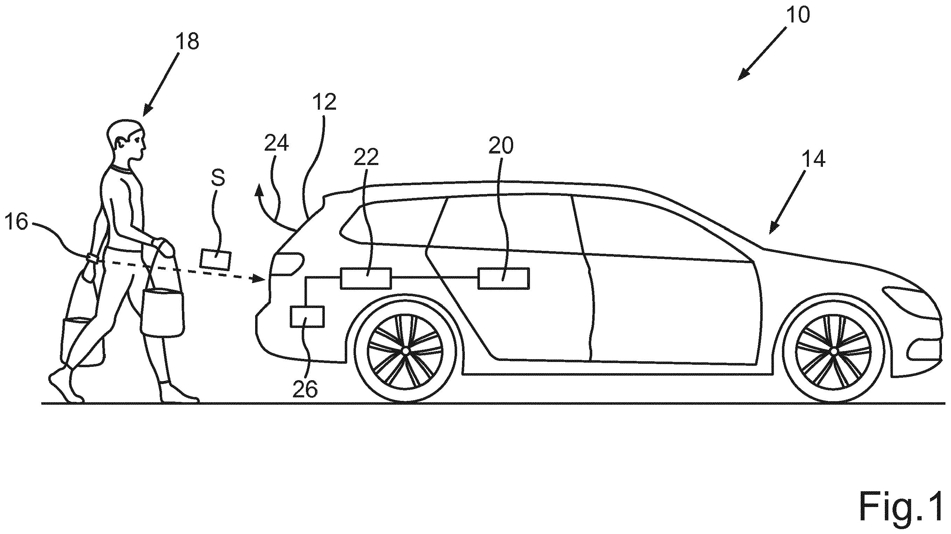

Im Folgenden ist ein Ausführungsbeispiel der Erfindung beschrieben. Hierzu zeigt die einzige Figur (Fig.) in einer schematischen Darstellung das System 10 zum Steuern einer Tür 12 eines Kraftfahrzeugs 14.

Bei dem im Folgenden erläuterten Ausführungsbeispiel handelt es sich um eine bevorzugte Ausführungsform der Erfindung.

Bei dem Kraftfahrzeug 14 handelt es sich bevorzugt um einen Kraftwagen, insbesondere um einen Personenkraftwagen. Bei der Tür 12 handelt es sich in dem hier aufgeführten Beispiel um eine Heckklappe des Kraftfahrzeugs 14, insbesondere um eine elektrisch verfahrbare oder sensorgesteuerte Heckklappe. Dabei kann es bei dem System 10 vorgesehen sein, mehrere Türen des Kraftfahrzeugs 14 zu steuern, wie beispielsweise die Heckklappe und eine oder mehrere Seitentüren des Kraftfahrzeugs 14.

Das System 10 weist ein portables mobiles Endgerät 16 auf. Bei dem portablen mobilen Endgerät 16 handelt es sich in diesem Ausführungsbeispiel um ein elektronisches Fitnessarmband, welches ein Nutzer 18 an seinem Armgelenk trägt. Alternativ kann es sich bei dem portablen mobilen Endgerät 16 auch um ein Mobiltelefon, insbesondere um ein Smartphone, handeln. Das portable mobile Endgerät 16 ist dazu eingerichtet, einen Gang des Nutzers 18 auszuwerten. Mit anderen Worten ist das portable mobile Endgerät 16 dazu eingerichtet, eine Ganganalyse des Gangs des Nutzers 18 durchzuführen. Dazu weist das portable mobile Endgerät 16 eine Sensoreinrichtung (in Fig. nicht gezeigt) mit einem Beschleunigungssensor auf.

Beispielsweise kann die Sensoreinrichtung ferner einen Magnetfeldsensor und/oder einen Schrittzähler und/oder einen GPS-Empfänger umfassen. Beim Auswerten des Gangs des Nutzers 18 kann das portable mobile Endgerät 16 dazu eingerichtet sein, einen Gangparameter zu bestimmen. Beispielsweise kann als Gangparameter eine Schrittlänge und/oder eine Schrittgeschwindigkeit und/oder ein Schrittrhythmus und/oder eine Zeitspanne erfasst werden, zu der die Füße in Kontakt mit dem Boden stehen. Der erfasste oder ermittelte Gangparameter kann anschließend ausgewertet werden. Dazu kann das portable mobile Endgerät 16 beispielsweise eine Steuereinrichtung (in Fig. nicht gezeigt) aufweisen. Die Steuereinrichtung kann beispielsweise als Mikroprozessor ausgebildet sein. Beispielsweise kann als Gangparameter mittels des Beschleunigungssensors eine Schrittgeschwindigkeit des Nutzers 18 erfasst werden. Die Schrittgeschwindigkeit kann dabei kontinuierlich erfasst werden während der Nutzer 18 geht oder sich fortbewegt.

Die Steuereinrichtung kann ferner dazu eingerichtet sein, zu ermitteln ob der Nutzer 18 etwas trägt oder nicht, also belastet oder unbelastet ist. Dazu kann der Steuereinrichtung beispielsweise ein Schwellwert oder Referenzwert des Gangparameters oder ein vorbestimmter Wertebereich des Gangparameters hinterlegt sein. Erfasst das portable mobile Endgerät 16 mehrere Gangparameter, so kann jedem der Gangparameter ein Schwellwert oder ein vorbestimmter Wertebereich zugeordnet werden. Beispielsweise hängt die Schrittgeschwindigkeit als Gangparameter des Nutzers 18 davon ab, ob der Nutzer 18 etwas trägt oder nicht. Mit "tragen" ist hier gemeint, dass der Nutzer 18 etwas hält oder stützt. Wenn der Nutzer 18 nichts trägt, ist seine Schrittgeschwindigkeit höher, als wenn er etwas trägt. Wird also mittels des portablen mobilen Endgeräts 16 beispielsweise kontinuierlich die Schrittgeschwindigkeit erfasst und ist der erfasste Wert der Schrittgeschwindigkeit unter den Schwellwert, so kann das portable mobile Endgerät 16 einen beladenen oder tragenden Zustand des Nutzers 18 signalisieren.

Nähert sich der Nutzer 18 nun beladen dem Kraftfahrzeug 14 und möchte etwas in das Kraftfahrzeug 14 einladen, so ist er durch den beladenen Zustand in seiner Beweglichkeit eingeschränkt.

Um den Nutzer 18 beim Öffnen oder Schließen der Tür 12 des Kraftfahrzeugs 14 zu unterstützen, gibt das portable mobile Endgerät 16 ein Stellsignal S aus. Bevorzugt kann das Stellsignal S ausgegeben werden, sobald oder wenn ein beladener Zustand des Nutzers 18 erfasst wird. Dieses Stellsignal S wird durch eine Erfassungseinrichtung 20 des Systems 10 empfangen. Die Erfassungseinrichtung 20 kann beispielsweise als Antenne ausgebildet sein. Die Erfassungseinrichtung 20 kann dazu im oder am Kraftfahrzeug 14 angeordnet sein. Das Stellsignal S kann beispielsweise über Bluetooth oder WLAN an die Erfassungseinrichtung übermittelt werden.

Nach Empfangen des Stellsignals S kann die Erfassungseinrichtung 20 ein Signal an eine Steuereinrichtung 22 des Systems 10 übermitteln. Beispielsweise kann die Erfassungseinrichtung 20 das Stellsignal S an die Steuereinrichtung 22 weiterleiten. Dazu sind die Steuereinrichtung 22 und die Erfassungseinrichtung 20 bevorzugt signaltechnisch miteinander gekoppelt. Die Steuereinrichtung 22 kann dazu in dem Kraftfahrzeug 14 angeordnet sein. Die Steuereinrichtung 22 des Kraftfahrzeugs 14 ist bevorzugt als Mikroprozessor ausgebildet. Nach Empfangen des Stellsignals S ist die Steuereinrichtung 22 dazu eingerichtet, die Tür 12, insbesondere die Heckklappe, derart anzusteuern, dass die Tür 12 des Kraftfahrzeugs 14 geöffnet wird. Das Öffnen der Tür 12 ist durch den Pfeil 24 in der Figur verdeutlicht.

Damit sich die Tür 12 nicht einfach bei Erfassen des Stellsignals S geöffnet wird, beispielsweise wenn sich der Nutzer 18 noch zu weit von dem Kraftfahrzeug 14 entfernt befindet, kann das System 10 eine weitere Erfassungseinrichtung 26 aufweisen. Die weitere Erfassungseinrichtung 26 kann dazu eingerichtet sein, den Nutzer 18 in einem Nahbereich des Kraftfahrzeugs 14 zu erfassen. Die weitere Erfassungseinrichtung 26 ist, wie der Figur zu entnehmen ist, in oder an dem Kraftfahrzeug 14 angeordnet. Beispielsweise ist die weitere Erfassungseinrichtung 26 als Antenne ausgebildet, welche mittels elektrischer Feldstärkemessung den Nutzer in dem Nahbereich erfassen kann, oder als Kamera ausgebildet, welche auf eine Umgebung des Kraftfahrzeugs 14 gerichtet ist. Ferner kann die weitere Erfassungseinrichtung 26 dazu eingerichtet sein, einen Abstand des Nutzers 18, bevorzugt innerhalb des Nahbereichs, zu erfassen. Es kann vorgesehen sein, dass die Tür nach Empfangen des Stellsignals S erst angesteuert wird, wenn sich der Nutzer 18 in einem vorbestimmten Abstand, beispielsweise von 3 Meter, zu dem Kraftfahrzeug 14 befindet. Der vorbestimmte Abstand kann der Steuereinrichtung 22, insbesondere einem Speicher der Steuereinrichtung 22, hinterlegt sein. Sobald nach dem Erfassen des Stellsignals S der Abstand des Nutzers 18 zu dem Kraftfahrzeug 14 den vorbestimmten Abstand erreicht, steuert die Steuereinrichtung 22 die Tür 12 des Kraftfahrzeugs 14 an.

Das Ansteuern der Tür 12 des Kraftfahrzeugs 14 kann an ein weiteres Kriterium gekoppelt sein. Damit nicht jedes beliebige portable mobile Endgerät dazu eingerichtet ist, ein Stellsignal an das Kraftfahrzeug 14 auszugeben, kann eine Kennung des portablen mobilen Endgeräts 16 ausgewertet werden. Dazu kann das portable mobile Endgerät 16 dazu eingerichtet sein, beim Ausgeben oder Aussenden des Stellsignals S auch ein Kennungssignal, welches eine Kennung des portablen mobilen Endgeräts 16 aufweist, auszugeben. Dieses Kennungssignal wird durch die Erfassungseinrichtung 20 erfasst und an die Steuereinrichtung 22 übermittelt. Der Steuereinrichtung 22 beziehungsweise dem Speicher der Steuereinrichtung 22 kann eine Kennung hinterlegt sein. Die Steuereinrichtung 22 kann dazu eingerichtet sein, die empfangene Kennung des portablen mobilen Endgeräts 16 mit der der Steuereinrichtung 22 hinterlegten Kennung zu vergleichen. Stimmt die Kennung des portablen mobilen Endgeräts mit der Steuereinrichtung 22 hinterlegten Kennung überein, so kann die Steuereinrichtung nach Empfangen des Stellsignals S dazu eingerichtet sein, die Tür 12 des Kraftfahrzeugs 14 anzusteuern.

Insgesamt ist durch die Erfindung das Verknüpfen von erfassten Daten einer Ganganalyse oder erfassten Gangparameter mittels eines Smart-Devices oder portablen mobilen Endgeräts mit der Elektronik eines Kraftfahrzeugs beschrieben, um dessen Heckklappe bei Annäherung zu öffnen.

Parameter des menschlichen Gangs, sogenannte Gangparameter, wie beispielsweise Schrittlänge und/oder Schrittgeschwindigkeit und/oder Schrittrhythmus oder Zeit der Füße auf dem Boden und/oder ein Pendeln der Arme verändern sich, wenn eine Person Lasten trägt im Vergleich zu einem Gang der Person ohne etwas zu tragen. Diese Parameter und deren Veränderung aufgrund einer solchen Beladung beziehungsweise eines solchen beladenen Zustands können mit einer Ganganalyse ermittelt werden. Die Verwendung einer Ganganalyse als Programmcode auf einem Smart-Device ist dazu eingerichtet, einen Gangparameter des Gangs der Person oder des Nutzers zu ermitteln. Die Ganganalyse erfolgt, während die Person geht, also sich fortbewegt.

Dadurch kann eine Verknüpfung der Ganganalyse mit Hilfe des Smart-Devices, insbesondere der Sensorik oder Sensoreinrichtung des Smart-Devices, mit der Elektronik zum Steuern einer Tür eines Kraftfahrzeugs erfolgen. Die Ganganalyse beziehungsweise das Smart-Device kann ermitteln, ob eine Person etwas trägt und sich so dem Kraftfahrzeug beladen nähert. In einem derartigen Zustand kann die Person die Tür, wie beispielsweise die Heckklappe des Kraftfahrzeugs, händisch nicht öffnen. Ferner kann durch die Ganganalyse ermittelt werden, ob die Person sich dem Kraftfahrzeug unbeladen nähert. In einem solchen Zustand ist dann bevorzugt keine automatische Ansteuerung der Tür erforderlich.

Zusätzlich können weitere Parameter, wie zum Beispiel das Messen des Pulses oder andere biometrische Daten, wie die Herzfrequenz, oder dem Schwingen der Arme mit dem Smart-Device gemessen oder erfasst werden. Diese biometrischen Daten können die Unterscheidung, ob eine Person beladen oder unbeladen ist, unterstützen.

Gemäß einer besonders bevorzugten Ausführungsform erfasst der Smart-Device mittels einer Ganganalyse, dass eine Person beladen ist und etwas trägt. Dies im Vergleich zu dem bekannten gemessenen Gang, wenn die Person nichts trägt. Optional werden weitere biometrische Parameter, wie Puls oder Armschwingen etc. mittels eines oder mehrerer Smart-Devices ermittelt und zur Auswertung, ob die Person etwas trägt hinzugezogen. Die Person nähert sich dem Kraftfahrzeug mit elektrisch verfahrbarer Heckklappe. Mittels Messung der elektrischen Signalstärke eines tragbaren Codegebers, wie zum Beispiel dem Smart-Device selbst, oder Positionsbestimmung wird erkannt, dass sich die Person dem Kraftfahrzeug nähert oder sich in einem definierten Abstand zu dem Kraftfahrzeug befindet. Das Kraftfahrzeug, insbesondere eine Erfassungseinrichtung des Kraftfahrzeugs, sucht nach einem gültigen Smart-Device im Heckbereich des Kraftfahrzeugs. Bei erkanntem Smart-Device im Heckbereich oder Nahbereich des Kraftfahrzeugs fragt das Kraftfahrzeug das Smart-Device, ob die Person in unbeladenen, also normalen, oder beladenen Zustand ist, also etwas trägt oder nicht. Das Smart-Device teilt dem Kraftfahrzeug mit, dass Person etwas trägt oder unbeladen ist. Im Falle, dass die Person beladen ist, kann erfasst werden, ob die Person für eine definierte Zeit im Nahbereich bleibt. Die Heckklappe wird geöffnet, wenn alle Bedingungen erfüllt sind, das heißt die Person etwas trägt und für eine definierte oder vorbestimmte Zeit im Nahbereich stehen bleibt.

Die Analyse des Gangs des Nutzers, welche durch eine Software zur Ganganalyse des portablen mobilen Endgeräts ausgeführt werden kann, kann den Gang des Nutzers im nicht-beladenen Zustand messen und die Parameter der verschiedenen Gangarten erlernen, um immer genauer zu werden.

Besonders bevorzugt eignet sich ein derartiges Verfahren oder System bei Mietfahrzeugen. Da der Nutzer das gemietete Kraftfahrzeug mit Hilfe des Smart-Devices suchen kann, um es an einem Ort abzuholen, kann während der Annäherung des Nutzers an das gemietete Kraftfahrzeug mittels des Smart-Devices erfasst werden, ob der Nutzer etwas trägt. Damit kann, wenn ermittelt wurde, dass der Nutzer etwas trägt, eine automatische Öffnung der Heckklappe durchgeführt werden.

### Bezugszeichenliste

- 10: System
- 12: Tür
- 14: Kraftfahrzeug
- 16: portables mobiles Endgerät
- 18: Nutzer
- 20: Erfassungseinrichtung
- 22: Steuereinrichtung
- 24: Pfeil
- 26: weitere Erfassungseinrichtung
- S: Stellsignal

## Patentansprüche

1. Verfahren zum Steuern einer Tür (12) eines Kraftfahrzeugs (14) umfassend die Schritte:
- Auswerten eines Gangs eines Nutzers (18) mittels eines portablen mobilen Endgeräts (16), welches eine Sensoreinrichtung umfasst und welches der Nutzer (18) bei sich trägt, wobei beim Auswerten des Gangs zumindest ein Gangparameter mittels eines Beschleunigungssensors der Sensoreinrichtung erfasst wird, wobei der zumindest eine Gangparameter einen beladenen Zustand oder einen unbeladenen Zustand des Nutzers (18) signalisiert;
- Ausgeben eines Stellsignals (S) in Abhängigkeit von dem Gang des Nutzers mittels des portablen mobilen Endgeräts (16) nach dem Erfassen des Gangparameters;
- Empfangen des Stellsignals (S) des portablen mobilen Endgeräts (16) von außerhalb des Kraftfahrzeugs (14) mittels einer Erfassungseinrichtung (20) des Kraftfahrzeugs (14);
- Ansteuern der Tür (12) des Kraftfahrzeugs (14) mittels einer Steuereinrichtung (22) des Kraftfahrzeugs (14) nach Empfangen des Stellsignals (S).

2. Verfahren nach Anspruch 1,
**dadurch gekennzeichnet, dass**
der Nutzer (18) in einem Nahbereich des Kraftfahrzeugs (14) erfasst wird, wobei das portable mobile Endgerät (16) das Stellsignal (S) erst ausgibt, wenn sich der Nutzer (18) in dem Nahbereich in einem vorbestimmten Abstand zu dem Kraftfahrzeug (14) befindet.

3. Verfahren nach Anspruch 1,
**dadurch gekennzeichnet, dass**
der Nutzer (18) in einem Nahbereich des Kraftfahrzeugs (14) erfasst wird, wobei die Steuereinrichtung (22) die Tür (12) des Kraftfahrzeugs (14) erst ansteuert, wenn sich der Nutzer (18) in dem Nahbereich in einem vorbestimmten Abstand zu dem Kraftfahrzeug (14) befindet.

4. Verfahren nach Anspruch 2 oder 3,
**dadurch gekennzeichnet, dass**
die Steuereinrichtung (22) die Tür (12) des Kraftfahrzeugs (14) erst ansteuert, wenn der Nutzer (18) für eine vorbestimmte Zeitspanne, insbesondere für eine Zeitspanne zwischen 0,5 Sekunden und 10 Sekunden, innerhalb des Nahbereichs erfasst wird.

5. Verfahren nach einem der vorhergehenden Ansprüche,
**dadurch gekennzeichnet, dass**
das portable mobile Endgerät (16) ein Kennungssignal, welches eine Kennung aufweist, an das Kraftfahrzeug (14) übermittelt, wobei die Steuereinrichtung (22) des Kraftfahrzeugs (14) die Tür (12) des Kraftfahrzeugs (14) erst ansteuert, wenn die Kennung mit einer der Steuereinrichtung (22) hinterlegten Kennung übereinstimmt.

6. Verfahren nach einem der vorhergehenden Ansprüche,
**dadurch gekennzeichnet, dass**
als Gangparameter eine Schrittlänge und/oder eine Schrittgeschwindigkeit und/oder ein Schrittrhythmus und/oder eine Herzfrequenz des Nutzer (18) und/oder ein Puls und/oder ein Schwingen eines Arm des Nutzers (18) und/oder eine Zeitspanne erfasst wird, zu der die Füße des Nutzers (18) in Kontakt mit dem Boden stehen.

7. Verfahren nach einem der vorhergehenden Ansprüche,
**dadurch gekennzeichnet, dass**
das Stellsignal (S) automatisch oder erst nach einer Betätigung eines Bedienelements des portablen mobilen Endgeräts (16) durch den Nutzer (18) ausgegeben wird.

8. System (10) zum Steuern einer Tür (12) eines Kraftfahrzeugs (14) umfassend:
- ein portables mobiles Endgerät (16), welches eine Sensoreinrichtung umfasst und dazu eingerichtet ist, einen Gang eines Nutzers (18) auszuwerten, welcher das portable mobile Endgerät (16) bei sich trägt, und beim Auswerten des Gangs einen Gangparameter mittels eines Beschleunigungssensors der Sensoreinrichtung zu ermitteln, wobei der Gangparameter einen beladenen Zustand oder einen unbeladenen Zustand des Nutzers (18) signalisiert, wobei
- das portable mobile Endgerät (16) ferner dazu ausgebildet ist, ein Stellsignal (S) in Abhängigkeit von dem Gang des Nutzers (18) auszugeben;
- eine Erfassungseinrichtung (20), welche dazu eingerichtet ist, das Stellsignal (S) des portablen mobilen Endgeräts (16) von außerhalb des Kraftfahrzeugs (14) zu empfangen; und
- eine Steuereinrichtung (22), welche dazu eingerichtet ist, nach Empfangen des Stellsignals (S) die Tür (12) des Kraftfahrzeugs (14) anzusteuern.

9. System (10) nach Anspruch 8,
**dadurch gekennzeichnet, dass**
die Sensoreinrichtung einen optoelektronischen Sensor und/oder einen optischen Sensor und/oder einen bioelektronischen Sensor und/oder einen GPS-Empfänger und/oder einen Magnetfeldsensor und/oder einen Neigungssensor umfasst.

10. System (10) nach Anspruch 8 oder 9,
**dadurch gekennzeichnet, dass**
das portable mobile Endgerät (16) als Mobiltelefon, insbesondere als ein Smartphone, oder als ein elektronisches Fitnessarmband oder als eine elektronische Uhr oder als eine elektronische Brille ausgebildet ist.

## Claims

1. A method for controlling a door (12) of a motor vehicle (14) comprising the steps:
- evaluating a gait of a user (18) by means of a portable mobile terminal device (16), which comprises a sensor device and which the user (18) carries with himself or herself, wherein during evaluation of the gait at least one gait parameter is acquired by an acceleration sensor of the sensor device, wherein the at least one gait parameter signals a laden condition or unladen condition of the user (18);
- emitting an actuating signal (S) in function of the gait of the user by means of the portable mobile terminal device (16) after acquisition of the gait parameter;
- receiving the actuating signal (S) of the portable mobile terminal device (16) from outside the motor vehicle (14) by means of a detection device (20) of the motor vehicle (14);
- controlling the door (12) of the motor vehicle (14) by means of a control device (22) of the motor vehicle (14) after reception of the actuating signal (S).

2. The method according to claim 1,
**characterized in that**
the user (18) in an area in the vicinity of the motor vehicle (14) is acquired, wherein the portable mobile terminal device (16) emits the actuating signal (S) only when the user (18) is in an area in the vicinity at a set distance from the motor vehicle (14).

3. The method according to claim 1,
**characterized in that**
the user (18) in an area in the vicinity of the motor vehicle (14) is acquired, wherein the control device (22) first controls the door (12) of the motor vehicle (14) if the user (18) is in the area in the vicinity at a set distance from the motor vehicle (14).

4. The method according to claim 2 or 3,
**characterized in that**
the control device (22) controls the door (12) of the motor vehicle (14) only if the user (18) is acquired for a set period, in particular for a period between 0.5 seconds and 10 seconds within the area in the vicinity.

5. The method according to one of the preceding claims,
**characterized in that**
the portable mobile terminal device (16) sends an identification signal, which has identification, to the motor vehicle (14), wherein the control device (22) of the motor vehicle (14) controls the door (12) of the motor vehicle (14) only if the identification coincides with a identification placed with the control device (22).

6. The method according to one of the preceding claims,
**characterized in that**
as gait parameter is acquired a step length and/or a step speed and/or a step rhythm and/or a heat frequency of the user (18) and/or a pulse and/or oscillation of an arm of the user (18) and/or a period of time, during which the feet of the user (18) are in contact with the ground.

7. The method according to one of the preceding claims,
**characterized in that**
the actuating signal (S) is emitted automatically or only after activation of an operating element of the portable mobile terminal device (16) by the user (18).

8. A system (10) for controlling a door (12) of a motor vehicle (14) comprising:
- a portable mobile terminal device (16), which comprises a sensor device and is equipped to evaluate a gait of a user (18) who carries the portable mobile terminal device (16) with himself or herself, and detect a gait parameter during evaluation of the gait by means of an acceleration sensor of the sensor device, wherein the gait parameter signals a laden condition or an unladen condition of the user (18), wherein
- the portable mobile terminal device (16) is further configured to emit an actuating signal (S) in function of the gait of the user (18);
- a detection device (20) that is equipped to receive the actuating signal (S) of the portable mobile terminal device (16) from outside the motor vehicle (14) ;
and
- a control device (22), which is equipped, after reception of the actuating signal (S) to control the door (12) of the motor vehicle (14).

9. The system (10) according to claim 8,
**characterized in that**
the sensor device comprises an optoelectronic sensor and/or an optical sensor and/or a bioelectronic sensor and/or a GPS receiver and/or a magnetic field sensor and/or a tilt sensor.

10. The system (10) according to claim 8 or 9,
**characterized in that**
the portable mobile terminal device (16) is configured as a mobile phone, particularly as a Smartphone, or as an electronic fitness wrist strap or as an electronic clock or as a pair of electronic spectacles.

## Revendications

1. Procédé de commande d'une porte (12) d'un véhicule automobile (14) comprenant les étapes:
- évaluer une marche d'un utilisateur (18) au moyen d'un terminal mobile portable (16) qui comprend un dispositif capteur et que l'utilisateur (18) emporte avec lui, dans lequel au moins un paramètre de marche est détecté par un capteur d'accélération du dispositif capteur lors de l'évaluation de la marche, dans lequel l'au moins un paramètre de marche signale un état chargé ou un état non chargé de l'utilisateur (18) ;
- émettre un signal d'actionnement (S) en fonction de la marche de l'utilisateur au moyen du terminal mobile portable (16) après la détection du paramètre de marche;
- recevoir le signal d'actionnement (S) du terminal mobile portable (16) depuis l'extérieur du véhicule automobile (14) au moyen d'un dispositif de détection (20) du véhicule automobile (14) ;
- entraîner la porte (12) du véhicule automobile (14) au moyen d'un dispositif de commande (22) du véhicule automobile (14) après réception du signal d'actionnement (S).

2. Procédé selon la revendication 1,
**caractérisé en ce que**
l'utilisateur (18) est détecté dans une zone à proximité du véhicule automobile (14), dans lequel le terminal mobile portable (16) émet le signal d'actionnement (S) uniquement lorsque l'utilisateur (18) est localisé dans la zone à proximité à une distance prédéterminée du véhicule à moteur (14).

3. Procédé selon la revendication 1,
**caractérisé en ce que**
l'utilisateur (18) est détecté dans une zone à proximité du véhicule automobile (14), le dispositif de commande (22) entraînant la porte (12) du véhicule automobile (14) uniquement lorsque l'utilisateur (18) est localisé dans la zone à proximité d'une distance prédéterminée du véhicule automobile (14).

4. Procédé selon la revendication 2 ou 3,
**caractérisé en ce que**
le dispositif de commande (22) entraîne la porte (12) du véhicule automobile (14) uniquement lorsque l'utilisateur (18) est détecté à l'intérieur de la zone à proximité pendant une période de temps prédéterminée, en particulier pendant une période de temps entre 0,5 seconde et 10 secondes.

5. Procédé selon l'une des revendications précédentes,
**caractérisé en ce que**
le terminal mobile portable (16) transmet un signal d'identification ayant un identifiant au véhicule automobile (14), dans lequel le dispositif de commande (22) du véhicule automobile (14) entraîne la porte (12) du véhicule automobile (14) uniquement lorsque l'identifiant coïncide avec un identifiant stocké du dispositif de commande (22).

6. Procédé selon l'une des revendications précédentes,
**caractérisé en ce que**
comme paramètres de marche sont détectés une longueur de pas et/ou une vitesse de pas et/ou un rythme de pas et/ou une fréquence cardiaque de l'utilisateur (18) et/ou un pouls et/ou un balancement d'un bras de l'utilisateur (18) et/ou une période de temps pendant laquelle les pieds de l'utilisateur (18) sont en contact avec le sol.

7. Procédé selon l'une des revendications précédentes,
**caractérisé en ce que**
le signal d'actionnement (S) est émis automatiquement ou uniquement après une activation d'un élément de manoeuvre du terminal mobile portable (16) par l'utilisateur (18).

8. Système (10) pour commander une porte (12) d'un véhicule automobile (14) comprenant:
- un terminal mobile portable (16) qui comprend un dispositif capteur et est adapté pour évaluer une marche d'un utilisateur (18) qui emporte avec lui le terminal mobile portable (16) et détecter un paramètre de marche par un capteur d'accélération du dispositif capteur lors de l'évaluation de la marche, dans lequel le paramètre de marche signale un état chargé ou un état non chargé de l'utilisateur (18), dans lequel
- le terminal mobile portable (16) est de plus adapté pour émettre un signal d'actionnement (S) en fonction de la marche de l'utilisateur (18);
- un dispositif de détection (20) qui est adapté pour recevoir le signal d'actionnement (S) du terminal mobile portable (16) depuis l'extérieur du véhicule automobile (14);
et
- un dispositif de commande (22) qui est adapté pour, après réception du signal d'actionnement (S), entraîner la porte (12) du véhicule automobile (14).

9. Système (10) selon la revendication 8,
**caractérisé en ce que**
le dispositif capteur comprend un capteur optoélectronique et/ou un capteur optique et/ou un capteur bioélectronique et/ou un récepteur GPS et/ou un capteur de champ magnétique et/ou un capteur d'inclinaison.

10. Système (10) selon la revendication 8 ou 9,
**caractérisé en ce que**
le terminal mobile portable (16) est conçu comme un téléphone mobile, en particulier comme un smartphone, ou comme un bracelet de fitness électronique ou comme une montre électronique ou comme des lunettes électroniques.
